# EUROPEAN PATENT SPECIFICATION

(11) **EP 3 794 329 B1**
(45) Date of publication and mention of the grant of the patent: **26.06.2024**
(21) Application number: 19729846.6
(22) Date of filing: 13.05.2019
(51) Int. Cl.: G01N 15/06, G01N 21/05, G01N 21/3577, G01N 21/47, G01N 21/85

(54) **TURBIDITY PROBE AND RELATED PROBE HOLDER**
MODULARER SONDENHALTER UND ENTSPRECHENDE SONDE
PORTE-SONDE MODULAIRE ET SONDE RESPECTIVE

(30) Priority: 16.05.2018 IT 201800005425
(43) Date of publication of application: 24.03.2021
(73) Proprietor: Chemitec S.r.l., 50018 Scandicci (FI) (IT)
(72) Inventor: CATELANI, Filippo, 50018 Scandicci (FI) (IT)
(74) Representative: IP Sextant s.r.l.
(86) International application number: PCT/IB2019/053933
(87) International publication number: WO 2019/220308

(56) References cited:
- WO-A1-2014/125457
- WO-A1-2016/205744
- WO-A1-2017/173020

## Description

The present invention relates to a modular probe-holder configured to accommodate one measuring probe, arranged to detect physical-chemical parameters of one fluid, preferably water, which modular probe-holder allows in a simple, reliable, efficient and economical way to monitor and/or check the fluid quality, as well as perform maintenance operations, quickly and at low costs.

The present invention also relates to one probe for measuring the turbidity of one fluid, which can be advantageously housed in said modular probe-holder.

Hereinafter in the present description, reference will be made mainly to applications of the modular probe-holder according to the invention, regarding the treatment of water. It should however be borne in mind that the modular probe-holder according to the invention can be used in any other technological context wherein physical-chemical parameters of any fluid, even different from water, need to be monitored and/or checked, while always remaining within the scope of protection of the present invention as defined by the appended claims.

It is also pointed out that the term "modular" for the probe-holder of the present invention makes reference to the possibility of applying that probe-holder to one set of probe-holders which are connectable with each other, for example as described in EP 2956770. More in particular, for reasons which will be better pointed out hereinafter, the probe-holder of the present invention is advantageously applicable in last position to the set of probe-holders, with respect to the flow direction of one fluid to be analysed, flowing in that set of probe-holders.

It is known that in the treatment of water it is essential to detect physical-chemical parameters thereof, such as turbidity for example.

Turbidity measurement provides, according to traditional techniques, to lighten with a beam of incident light, at a given frequency, a water sample to be analysed. In the water sample, lightened by the incident light beam, the particles suspended therein, in part absorb one portion of the light energy contained in the incident light beam, in part reflect it, spreading it in the surrounding environment and toward one detection device. The light energy of the incident beam detected by the detection device may be placed in relation, by means of known physical laws, with the turbidity of the analysed water sample.

In order to perform reliable turbidity measurements, thereby minimizing the measurement errors caused by diffusion of the incident light beam in the environment and reflections due to the walls of the chamber wherein the measurement is performed, in conventional measurement systems it is provided to transmit one monochromatic incident light beam, for example at the infra-red frequency, along one optical path of significant length, typically comprised between 20cm and 30cm, whereby conventional measurement systems of water turbidity have large dimensions, for example of the order of 30-40 cm.

Conventional systems for measuring turbidity work with a reduced pressure of the water to be analysed and, for this reason, they require the setting up of one branch line of the hydraulic circuit, along which the water to be analysed flows, whereby once analysed, the water having a too low pressure can no longer be entered into the hydraulic circuit from which it was taken and is therefore lost.

Moreover, current systems for measuring the turbidity of water are subjected to frequent maintenance operations, due to anomalies found by the same system, often caused by particles in suspension into the water that accumulate on the detectors, first causing an incorrect reading of turbidity and then a shut-down of the system itself. The maintenance of the conventional measurement systems, an example of which is provided in WO 2017/173020, is not easy and involves downtimes and high costs. Other examples of traditional systems are provided in WO 2014/125457 A1 and WO 2016/205744 A1.

The need is therefore felt to provide a system for measuring physical-chemical parameters of one fluid, in particular water turbidity, which solves the above mentioned drawbacks.

More particularly, the object of the present invention is to allow, in a simple, reliable, efficient and economical way, performing measurements of physical-chemical parameters of one fluid, in particular water turbidity, by means of one system having reduced dimensions, which does not waste the water used for measuring those parameters and that is easy to maintain.

It is a specific object of the present invention one modular probe-holder, configured to house at least one probe for measuring the turbidity of one fluid, according to independent claim 1.

According to a further aspect of the invention, said at least one measurement chamber comprises at least one portion of said at least one rear part and said at least one front part.

According to an additional aspect of the invention, said modular probe-holder can comprise at least one plug shaped element, configured to be plugged into-unplugged from said at least one second outlet through opening.

According to another aspect of the invention, said at least one first inlet through opening can delimit at least one first inlet conduit, communicating at a first end thereof with the outside of said at least one hollow body and, at the other end thereof, with a lower portion of said at least one measurement chamber, said at least one hollow body comprising at least one bottom wall and said at least one first inlet conduit being optionally arranged parallel to said at least one bottom wall.

According to a further aspect of the invention, said at least one first outlet through opening can delimit at least one first outlet conduit, communicating at a first end thereof with the outside of said at least one hollow body and, at the other end thereof, at an upper portion of said at least one measurement chamber, said at least one hollow body comprising at least one top wall and said at least one first outlet conduit being optionally arranged parallel to said at least one top wall.

According to an additional aspect of the invention, said rear part of said at least one cavity can comprise at least one upper section and at least one central section, said at least one upper section having a diameter greater than that of said at least one central section, whereby at least one relief is delimited between said sections, configured to work as an abutment wall of said probe, when said probe is inserted into said at least one modular probe-holder, through said at least one second inlet through opening.

According to another aspect of the invention, said at least one first outlet conduit, at the upper portion of said at least one measurement chamber, can lead into said at least one upper section of said rear part of cavity.

According to a further aspect of the invention, at said at least one second outlet through opening, said at least one hollow body can delimit at least one first recessed housing seat, for housing said at least one closing element, said at least one first recessed housing seat extending around said at least one second outlet through opening, and delimiting at least one groove, said groove extending substantially perimetrically with respect to said at least one second outlet through opening, for housing at least one sealing element therein, optionally an O-ring, said at least one first recessed housing seat optionally having a substantially rectangular configuration.

According to a further aspect of the invention, said at least one closing element can comprise:
- at least one external element, having a configuration substantially corresponding to that of said at least one first recessed housing seat, said at least one external element having at least one flat face, configured to face, in use, said at least one measurement chamber; and
- at least one plate-like internal element, fixed to said at least one external element at said at least one flat face, and shaped so that one face thereof, configured to face, in use, said at least one measurement chamber, has size substantially corresponding to the size of said at least one second outlet through opening, whereby when said at least one closing element closes said at least one second outlet through opening, said at least one plate-like internal element closes said at least one measurement chamber.

According to another aspect of the invention, in said at least one first recessed housing seat at least one first fastening seat can be formed, and in said at least one external element of said at least one closing element at least one corresponding first fastening through opening can be formed, whereby when at least one closing element is housed in said at least one first recessed housing, said at least one first fastening seat and said at least one corresponding first fastening through opening are aligned with each other and can receive corresponding fastening elements, configured to secure the closing element to the hollow body so that said measurement chamber is fluid-tight.

According to a further aspect of the invention, said modular probe-holder can comprise at least one fastening ring, configured for fastening in position said measuring probe, when said probe is inserted into said probe-holder, and at said at least one second inlet through opening, said at least one hollow body can delimit at least one second recessed housing seat, for housing said at least one fastening ring, said at least one second recessed housing seat extending around said at least one second inlet through opening, and being configured to support said at least one fastening ring inserted on said probe, when said probe is inserted in said probe-holder.

According to an additional aspect of the invention, said fastening ring can comprise at least one band body arranged according to a substantially circular configuration, having free ends, said free ends ending disposed parallel to each other along a substantially radial direction away from said at least one circular band body, wherein at least one corresponding second fastening through opening can be formed in each one of said free ends, wherein at least one third fastening through opening can be formed in at least one central portion of said at least one band body, said central portion being substantially opposite to said free ends of the fastening ring, and wherein
in said at least one hollow body at least one corresponding fourth fastening through opening can be formed, for connection between an outer face of said hollow body, optionally a side wall, and said at least one second recessed housing seat, as well as - at least one fifth fastening through opening, for connection between an outer face of said hollow body, optionally a rear wall and said at least one second recessed housing seat, whereby when said at least one fastening ring is housed in said at least one second recessed housing seat, said second fastening through openings are aligned with said at least one fourth fastening through opening and said at least one third fastening through opening is aligned with said at least one fifth fastening through opening so that they can receive corresponding fastening elements, configured to fasten said at least one fastening ring to said at least one hollow body, whereby said probe is configured to be inserted in said at least one fastening ring.

It is also a specific object of the invention one probe for measuring the turbidity of one fluid, configured to be housed in a modular probe-holder as described above, according to independent claim 13.

According to another aspect of the invention, said measurement portion can comprise at least one face, on which said at least one entry and said at least one exit of said probe are supported, wherein said at least one face is disposed obliquely with respect to a longitudinal axis of said probe and obliquely with respect to said at least one substantially longitudinal axis of said at least one hollow body, when said probe is inserted in said probe-holder and fixed thereto.

The present invention will be now described, for illustrative but not limiting purposes, according to its preferred embodiments, with particular reference to the Figures of the accompanying drawings, wherein:
Figure 1 shows a perspective view, in side elevation and partly exploded, of one probe-holder and one probe according to the present invention;
Figure 2 is a perspective view, from below and partially from the rear, of the probe-holder and probe of Figure 1 assembled together;
Figure 3 shows another perspective view, in side elevation, of the probe-holder and probe of Figure 2 assembled together;
Figure 4 shows a first plan view of the probe-holder and probe of Figure 2 assembled together;
Figure 5 is a perspective view in side elevation, of the probe-holder of figure 1 with some parts removed;
Figure 6 illustrates a longitudinal section view, with parts shown in phantom lines, taken along section line A-A of Figure 4;
Figure 7 shows a perspective view of the probe of Figure 1;
Figure 8 is a longitudinal section view, with parts shown in phantom lines, taken along section line A-A of Figure 4;
Figure 9 illustrates a longitudinal section view, taken along section line A-A of Figure 4 of the probe-holder and probe assembled together; and
Figure 10 shows a perspective view, on an enlarged scale of one detail of the probe-holder and probe of Figure 9 assembled together.

In the enclosed Figures the same reference numerals will be used for similar elements.

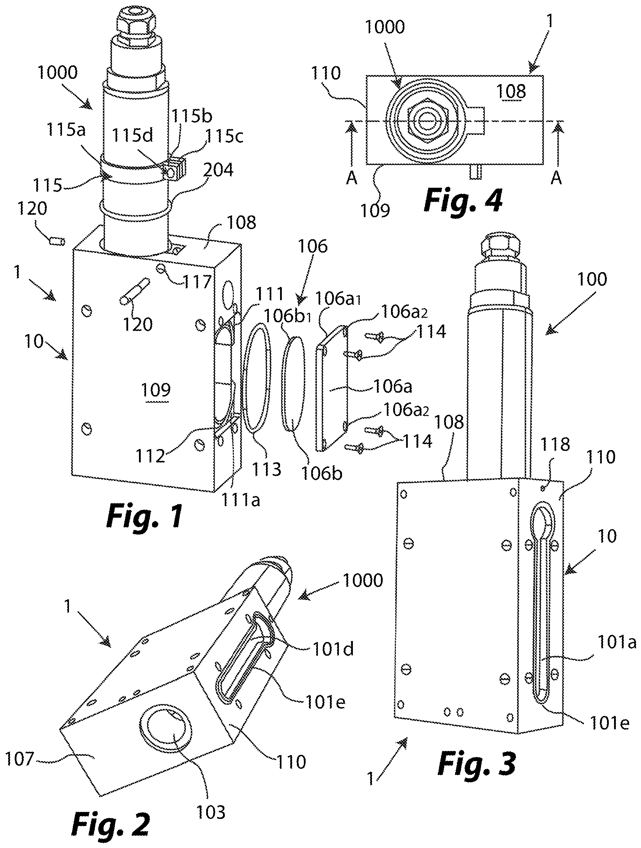

As you will note, the terms "rear", "front", "side", "top", "bottom", "lower" and "upper" are not intended to be limiting, are provided for the sole purpose of simplifying the understanding of the present description and relate to the probe-holder and probe shown in Figure 1.

With reference to Figures 1 to 6, 9 and 10, it will be noted how a modular probe-holder 1 according to the present invention, indicated with reference number 1, is configured to accommodate at least one probe 1000 for measuring at least one physical-chemical parameter of a quantity of water, and comprises at least one hollow body 10, for example made of plastic material, such as black PCV, made in a single piece or in two or more parts welded together, wherein at least one cavity 20 is formed, delimiting at least one measurement chamber 201. The measurement chamber 201 is configured to receive the quantity of water to be analysed.

As is easily understood, the hollow body 10 of the probe-holder 1 of the present invention can also be made of other plastic materials, such as for example polyoxymethylene (POM), polypropylene (PP), PPS (Ryton), nylon, and acrylonitrile-butadiene-styrene (ABS), as long as they are black.

In the hollow body 10 of the probe-holder 1 of the present invention there are formed:
- at least a first inlet through opening 101, configured to place in fluid communication the outside of the hollow body 10 with the measurement chamber 201, thereby allowing, in use, the inflow of water in the measurement chamber 201;
- at least a first outlet through opening 102, configured to place in fluid communication the measurement chamber 201 with the outside of the hollow body 10, thereby allowing, in use, the outflow of water from the measurement chamber 201; and
- at least a second inlet through opening 104, communicating with one top portion of the measurement chamber 201 and configured to house at least one portion of the probe 1000, for carrying out the measurement of the physical-chemical parameter of water, for example turbidity.

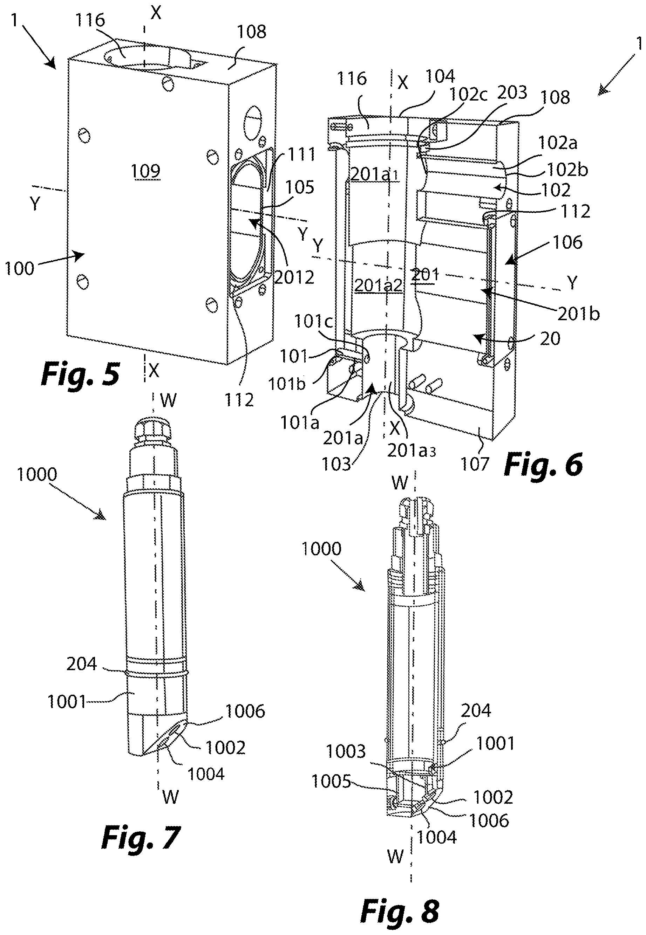

In the hollow body 10 of the modular probe-holder 1 of the present invention, at least a
second opening through outlet 105 (see Fig. 5) is also advantageously provided, at the measurement chamber 201, configured to put into communication the measurement chamber 201 with the outside of the hollow body 10.

In the hollow body 10 of the probe-holder of the present invention a third outlet through opening 103 is also formed, configured to put in fluid communication a lower portion of the measurement chamber 201 with the outside of the hollow body 10, for example when it is necessary to empty the measurement chamber 201.

The hollow body illustrated in the Figures has a parallelepiped configuration, but as it is easily understood, it can also have a different configuration, provided that it delimits one cavity 20 and the through openings described above are formed therein.

The modular probe-holder 1 of the present invention further comprises at least one closing element 106 for that second outlet through opening 105, which can be fixed in a removable manner on the hollow body 10, at said second outlet through opening 105 so as to allow or prevent, depending on the need, access to the measuring chamber 201 from the outside. That second outlet through opening 105 may, for example, advantageously allow the access to the cavity 20 for an operator to perform the maintenance operations.

The cavity 20 delimited by the hollow body 10 is substantially configured as an overturned "T", more particularly according to a "T" counterclockwisely rotated by 90°, and comprises:
- one rear part 201a, corresponding to the head of the "T", extending along one substantially longitudinal axis (x-x) between the second inlet through opening 104 and the third outlet through opening 103, and having a substantially circular cross-section, with a diameter which varies along the longitudinal axis (x-x);
- one front part 201b, corresponding to the body of the "T", extending along an axis (y-y) substantially transverse with respect to the substantially longitudinal axis (x-x), between the rear part 201a of cavity 201 and the second outlet through opening 105 formed in the hollow body 10.

The front part 201b of the cavity 201 has a substantially oval cross section and the measurement chamber 201 comprises at least one portion of the rear part 201a and the entire front part 201b of the cavity 20 of the modular probe-holder 1.

The modular probe-holder 1 according to the present invention comprises at least one plug member (not shown in the Figures) configured to close the third outlet through opening 103 of the measurement chamber 201 and be extracted, when needed, from said third outlet through opening 103, for example to allow to empty the measuring chamber 201 from the water possibly contained therein. The plug member is shaped in a way corresponding to the third outlet through opening 103, so as it can be inserted in - disconnected from it, maintaining fluid tightness when it is inserted.

The first inlet through opening 101 delimits a first inlet conduit 101a, communicating at a first end 101b thereof with the outside of the hollow body 10 and, at the other end 101c thereof, with a lower portion of the measurement chamber 201. The first inlet conduit 101a is optionally obtained parallel to a bottom wall 107 of the hollow body 10.

As it will be noted, at the first through opening 101, the modular probe-holder 1 of the present invention may advantageously be connected directly to a water source, or it can be connected to another probe-holder, for example of a type described in EP2956770. For this purpose, in the hollow body 10 of the modular probe-holder 1 of the present invention, at one outer wall thereof which is in communication with the first inlet conduit 101a, and in the Figures is represented with the reference number 110, one groove 101d is formed (see in particular figures 2 and 3), through which the output of another modular probe-holder of the type described in EP2956770, which is approached to the modular probe-holder 1 of the present invention, can be placed in fluid communication with the first inlet through opening 101. In order to preserve the fluid tightness between the two mutually approached probe-holders, at groove 101d a recess 101 is also provided perimetrical with respect to that groove, for housing therein suitable fluid tight elements, for example an O-ring of any suitable type.

The first outlet through opening 102, like the first inlet through opening 101 delimits at least one first outlet conduit 102a, communicating at a first end 102b thereof with the outside of the hollow body 10 and, at the other end 102c thereof, with a top portion of the measurement chamber 201. The first inlet conduit 102a is optionally obtained parallel to a top wall 108 of the hollow body 10.

With such a configuration, it will be appreciated that, in use, the water entering from the first inlet through opening 101, when the plug member is inserted into the third outlet through opening 103, can be accumulated in the measurement chamber 201 and can exit the hollow body 10 of the probe-holder 1 through the first outlet through opening 102.

As you will note, the rear part 201a of the cavity 20 comprises at least one upper section 201a1 and at least one central section 201a2, and the upper section 201a1 has a diameter greater than that of the central section 201a2, whereby at least one relief 202 is delimited between those sections, which is configured to work as an abutment wall of the probe 1000, when the probe is inserted into the modular probe-holder 1, through the second inlet through opening 104. In the drawings it can be noted how the rear part 201a of the cavity 20 also comprises a lower section 201a3, with diameter even smaller than the diameter of the central section, designed to accommodate the plug member described above. The lower 201a3, central 201a2 and upper 201a1 sections are dimensioned in such a way as to ensure that in the measuring chamber 201 one volume of water can be delivered, in use, such that a correct and reliable reading of turbidity can be performed, minimizing the interference linked to reflection of the incident light beam, by the walls of the measurement chamber 201.

As can be seen from the drawings, in the probe-holder 1 according to the present invention the first outlet conduit 102 is in communication with the top of the measurement chamber 201, at the upper section 201a1 of the rear part 201a of the cavity 20.

According to a particularly advantageous aspect of the invention, at the second outlet through opening 105 the hollow body 10 delimits at least one first recessed housing seat 111, configured to house the closing element 106.

That first recessed housing seat 111 extends into the hollow body 10, around the second outlet through opening 105 and comprises at least one groove 112, formed substantially along the perimeter of the second outlet through opening 105, configured to house, therein, at least one sealing element 113, optionally one O-ring made of elastic material.

According to one preferred variant of the invention, the first recessed housing seat 111 has a substantially rectangular configuration and the closing element 106, comprises:
- at least one external element 106a, having configuration substantially corresponding to that of the first recessed housing seat 111, and having at least one flat face 106a1, configured to face, in use, the measurement chamber 201;
- and at least one plate-like internal element 106b, fixed in any suitable way to the external element 106a at that flat face 106a1.
The plate-like internal element 106b is shaped in such a way that one face 106b1 thereof, configured to face, in use, the measurement chamber 201, has dimensions substantially corresponding to or slightly greater than those of the second outlet through opening 105, whereby when the closing element 106 is housed in the first housing seat 111, the plate-like internal element 106b, closes the measurement chamber 201.

Advantageously, the cavity 20 of the modular probe-holder 1 according to the invention is made of black PCV and also the plate-like internal element 106b of the closing element 106 or at least its face 106b1 facing, in use, the measurement chamber 201, is made of black plastic material, optionally black PVC or in one of the other materials indicated above for the hollow body 10, so that when the closing element 106 closes the measurement chamber 201, the surface of the measurement chamber is all made of black PCV. As will be described in the following, this aspect is particularly advantageous for the measurement of water turbidity.

The probe-holder 1 of the present invention comprises at least one removable fastening member of the closing element 106 to the hollow body 10 and, for this purpose in the recessed housing seat 111 at least one first fastening seat 111a is formed. Similarly, in the external element 106a of the closing element 106 at least a corresponding first fastening through opening 106a2 is formed, so that when the closing element 106 is housed in the first recessed housing seat 111, the first fastening seat 111a and the at least corresponding first fastening through opening 106a2 are in axis with each other and can receive a corresponding fixing element 114, for example a threaded screw, configured to ensure the closing element 106 to the hollow body 10, so that the measuring chamber 201, also thanks to the presence of the sealing element 113, is fluid-tight.

Also in the upper section 201a1 of the rear part 201a of the cavity 20, at least one peripheral groove 203 is formed, transverse with respect to the substantially longitudinal axis (x-x) and configured for housing, therein, at least another sealing element 204, optionally an O-ring made of elastic material. That other sealing element is configured to maintain the cavity 20 fluid-tight, at the upper section 201a1, when the measurement probe 1000 is inserted therein.

The modular probe-holder 1 according to the present invention also comprises at least one fastening ring 115, configured for fastening in position the measuring probe 1000, when it is inserted into the probe-holder 1.

For this reason, at the second inlet through opening 104, the hollow body 10 of probe-holder 1 delimits at least one second recessed housing seat 116, configured for housing such a fastening ring 115. This recessed housing seat 115 extends around the second inlet through opening 104 and is configured to support the fastening ring 116, for example when it is inserted on the probe 1000, which is in turn inserted in the hollow body 10 of the probe-holder 1.

The fastening ring comprises at least one band body 115a arranged according to a substantially circular configuration having free ends 115b and 115c, which terminate arranged parallel to one another along a substantially radial direction away from the circular band body 115a. In each one of the two free ends 115b and 115c at least one corresponding second fastening through opening 115d is formed, while a third fastening through opening 115e (see

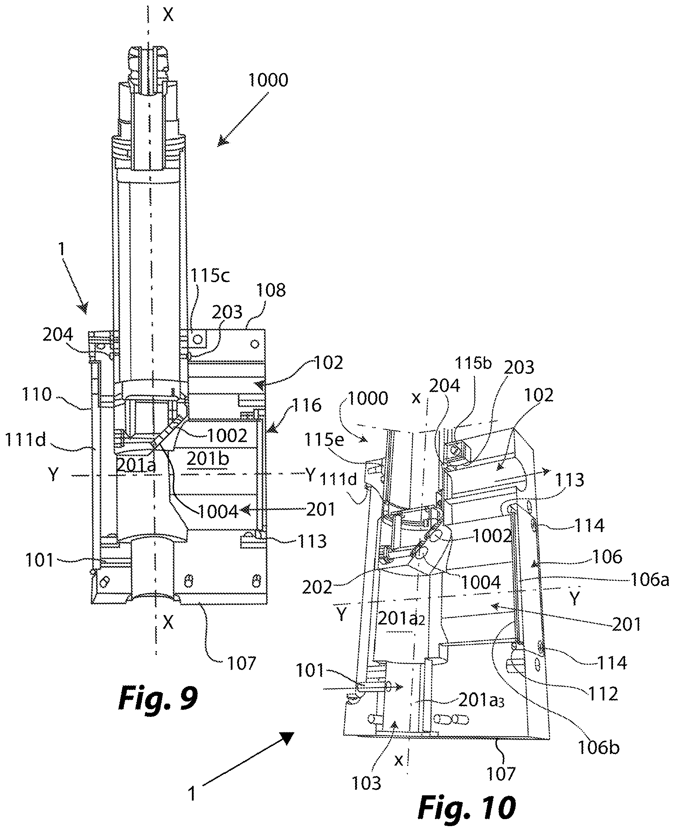

Figure 10) is formed in a central portion of the band body 115a, substantially opposite to the free ends 115b and 115c of the fastening ring.

In the hollow body 10 of the probe-holder 1 of the present invention there is formed:
- at least a fourth fastening through opening 117, between an outer face of said hollow body, one lateral wall 109 and the second recessed housing seat 116, as well as
- at least a fifth fastening through opening 118, between an outer face of said hollow body, one rear wall 110 and the second recessed housing seat 116,
whereby, when the fastening ring 115 is housed in the second recessed housing 116, the second fastening through openings 115d are in axis with the fourth fastening through opening 117 and the third fastening through opening 115e is located in axis with the fifth fastening through opening 118. With this configuration, such openings in the hollow body 10 and in the fastening ring 115 may receive corresponding fastening elements 120, optionally pins or screws suitable for the purpose, configured to secure the fastening ring 115 to the hollow body 10, and thus one probe 1000, inserted in the probe-holder 1 surrounded by the fastening ring 115.

The probe-holder 1 described above is advantageously usable in combination with one probe 1000 for measuring the turbidity of water, which comprises, as is known, at least one measurement portion 1001, configured to be inserted into the measurement chamber 201 of the probe-holder 1.

The measurement portion of probe 1000 includes, inter alia:
- at least one exit 1002, obtained in the measurement portion 1001, operatively connected, in a way known to the skilled person, to at least one emitting device 1003 of at least one light beam, for example one infra-red led, for the emission of at least one light beam; and
- at least one entry 1004, obtained in the measurement portion 1001 of the probe 1000, operatively connected to at least one detecting device 1005 of said light beam, for example one infra-red photo diode.

At said exit 1002 and entry 1004, the probe comprises at least one glass for separation of the inside and the outside of the probe.

According to a particularly advantageous aspect of the invention the measurement portion 1001 is further configured so that, when the probe 1000 is inserted in the respective probe-holder and it abuts on relief 202 of cavity 20, the exit 1002 is at the measurement chamber 201 of the hollow body 10 and can transmit at least one light beam generated by the emitting device 1003 along one forward optical path having an angle between -10 ° and + 10 °, preferably comprised between -5° and +5°, even more preferably comprised between -1° and +1°, with respect to an axis, passing through the exit 1002 and parallel to the substantially longitudinal axis (x-x) of symmetry of the measurement chamber 201. The light beam generated by the emitting device 1003, propagates from the exit 1002 into the measurement chamber 201, according to an optical cone of amplitude ranging between 5° and 10°, preferably between 6° and 8° with respect to the direction of the forward optical path.

Not only that, the measurement portion 1001 of probe 1000 is configured in such a way that the entry 1004 is also in the measuring chamber 201 and receives the light beam along an backward optical path substantially parallel to the transverse axis of symmetry y-y of the measurement chamber 201.

Thus, for this purpose, the measurement portion 1001 of probe 1000 comprises at least one face 1006, on which the entry 1004 and exit 1002 of the probe are supported, which face 1006 is arranged obliquely with respect to a longitudinal axis (w-w) of the Probe 1000 and obliquely with respect to the longitudinal axis (x-x) of the hollow body 10, when the probe 1000 is inserted into the probe-holder 1.

As will be appreciated, the measurement portion 1001 of probe 1000 occupies part of the upper section 201a1 of the measurement chamber 201 at the first outlet through opening 102. Thus, in order to allow in any case the outflow of water from the measurement chamber 201 when the probe-holder 1 and the probe 1000 are assembled together and in operation, the probe is configured in such a way that its transversal dimensions, with respect to the transversal dimension of the upper section 201a1 of the rear part of cavity 20 of the hollow body 10, is such that, in use, the water entering the measurement chamber 201, coming from the first inlet through opening 101, can exit the measurement chamber 201, at the first outlet through opening 102.

Advantageously, with such a configuration of the probe-holder 1 and probe 1000 according to the present invention, it is evident that possible gas bubbles in the water sample under examination will tend to flow toward the top wall 108 of the modular probe-holder hollow body 10, thereby leaving the measurement chamber 201, in particular along the forward and backward optical path of the light beam employed for measurement, so that accuracy of measures will be improved.

With such a configuration of the probe-holder 1 and probe 1000 according to the present invention it is quite obvious that the problems represented in the introduction are resolved.

In fact, it is quite obvious that the particular configuration of the measurement portion 1001 of probe 1000, together with the particular arrangement and configuration of the measurement chamber 201 of the probe-holder 1, whose surface is fully made of black PCV, allows to emit a beam of incident light along one optical path (forward and backward) which is long enough to obtain one correct turbidity measurement, but at the same time reduced with respect to conventional systems, and also allows to minimise the optical reflections, caused by the walls of the measurement chamber, whereby when the probe-holder 1 and the probe 1000 are assembled together and in operation, it is possible to obtain a reliable turbidity measurement of the water present in the measurement chamber 201, even with the probe-holder1 and a probe 1000 described above of reduced dimensions with respect to the currently used measurement systems.

Laboratory tests have also shown that the particular configuration of the probe-holder 1 and probe 1000 allows to carry out correct and reliable turbidity measurements of a water sample, delivered into the measurement chamber even at high pressures, for example around 5 atmospheres, whereby the probe-holder 1 and the probe 1000 described above can be used for by-pass measurements, i.e. which provide the re-entry of the water used for the measurement, in the hydraulic circuit from which this was withdrawn.

Not only that, with the probe-holder 1 and probe 1000 described above maintenance operations are also easier. In fact, thanks to the closing element 106, it is possible to open a convenient passage to the measurement chamber 201 of the probe-holder 1, that in the long run becomes dirty because of the particles suspended in the water, and perform cleaning operations more easily, reducing downtime of the probe-holder 1 and the cost of maintenance. Not only that, without having to disassemble the probe 1000 from the respective probe-holder 1, through the second outlet through opening 105, it is possible to comfortably access also to the measurement portion 1001 of the probe 1000 and more particularly the exit 1002 and entry 1004, for cleaning of the respective glasses.

In the foregoing the preferred embodiments were described and some modifications of the present invention have been suggested, but it should be understood that those skilled in the art can make modifications and changes without departing from the relative scope of protection, as defined by the appended claims.

## Claims

1. Modular probe-holder (1), configured to house at least one probe (1000) for measuring the turbidity of a fluid, comprising at least one hollow body (10) having a top wall (108), a bottom wall (107), a rear wall (110) between said top wall (108) and said bottom wall (107), a front wall, opposite to said rear wall (110) and arranged between said top wall (108) and said bottom wall (107) and two lateral walls (109) arranged between said top wall (108) and said bottom wall (107) and between said rear wall (110) and said front wall, wherein in said at least one hollow body (10) at least one cavity (20) is formed, delimiting at least one measurement chamber (201), said at least one measurement chamber (201) being con-figured to receive a quantity of said fluid, in said at least one hollow body (10) being furthermore obtained:
- at least a first inlet through opening (101), at the rear wall (110) of said hollow body (10), configured to place in fluid communication the outside of said at least one hollow body (10) with said at least one measurement chamber (201), and allow the inflow of said fluid in said at least one measurement chamber (201);
- at least a first outlet through opening (102), at the front wall of said hollow body (10) opposite to said rear wall (110), configured to place in fluid communication said at least one measurement chamber (201) with the outside of said at least one hollow body (10), and allow the outflow of said fluid from said at least one measurement chamber (201);
- at least a second inlet through opening (104), at the top wall (108) of said hollow body (10), communicating with at least said at least one measurement chamber (201) and configured to house at least one portion of said probe (1000) for measuring said at least one physical-chemical parameter of said fluid; and
- at least a second outlet through opening (105), at said at least one measurement chamber (201), configured to place said at least one measurement chamber (201) in direct communication with the outside of said at least one hollow body (10) at the front wall of said hollow body (10) opposite to said rear wall (110),
said modular probe-holder (1) further comprising at least one closing element (106) of said at least second outlet through opening (105), which can be removably fixed on said at least one hollow body (10) and delimits said measurement chamber (201) at said at least second outlet through opening (105), so as to allow or prevent direct access to said at least one measurement chamber (201) from the outside, the surface of said cavity (20), at said at least one measurement chamber (201), being covered with black plastic material, and the surface of said at least one closing element (106), at said at least one measurement chamber (201), being covered with black plastic material, wherein in said at least one hollow body (10) at least a third outlet through opening (103) is obtained at the bottom wall (107) of said hollow-body (10), said third outlet through opening (103) being configured to place in fluid communication said at least one measurement chamber (201), with the outside of said at least one hollow body (10), and
wherein said cavity (20) is substantially configured as an overturned "T" and comprises:
- at least one rear part (201a), corresponding to the head of the "T", extending along one substantially longitudinal axis (x-x) between said at least second inlet through opening (104) and said at least third outlet through opening (103), and having a substantially circular cross-section, with a diameter which varies along said substantially longitudinal axis (x-x);
- at least one front part (201b), corresponding to the body of the "T", extending along substantially transverse axis (y-y) with respect to said substantially longitudinal axis (x-x), between said at least one rear part (201a) and said at least second outlet through opening (105), and having a substantially oval cross-section.

2. Modular probe-holder (1) according to claim 1, wherein said at least one measurement chamber (201) comprises at least one portion of said at least one rear part (201a) and said at least one front part (201b).

3. Modular probe-holder (1) according to any one of the preceding claims, comprising at least one plug shaped element, configured to be plugged into-unplugged from said at least second outlet through opening (105).

4. Modular probe-holder (1) according to any one of the preceding claims, wherein said at least first inlet through opening (101) delimits at least a first inlet conduit (101a), communicating at a first end (101b) thereof with the outside of said at least one hollow body (10) and, at the other end (101c) thereof, with a lower portion of said at least one measurement chamber (201), and said at least first inlet conduit (101a) being optionally arranged parallel to said at least one bottom wall (107).

5. Modular probe-holder (1) according to any one of the preceding claims, wherein said at least first outlet through opening (102) delimits at least a first outlet conduit (102a), communicating at a first end (102b) thereof with the outside of said at least one hollow body (10) and, at the other end (102c) thereof, at an upper portion of said at least one measurement chamber (201), said at least first outlet conduit (102a) being optionally arranged parallel to said at least one top wall (108).

6. Modular probe-holder (1) according to any one of the preceding claims, wherein said rear part (201a) of said at least one cavity (20) comprises at least one upper section (201a1) and at least one central section (201a2), said at least one upper section (201a1) having a diameter greater than that of said at least one central section (201a2), whereby at least one relief (202) is delimited between said sections, configured to work as an abutment wall of said probe (1000), when said probe is inserted into said at least one modular probe-holder (1), through said at least second inlet through opening (104).

7. Modular probe-holder (1) according to claim 5 and 6, wherein said at least first outlet conduit (101a), at the upper portion of said at least one measurement chamber (201), leads into said at least one upper section (201a1) of said rear part (201a) of cavity (20).

8. Modular probe-holder (1) according to any one of the preceding claims, wherein at said at least second outlet through opening (105), said at least one hollow body (10) delimits at least a first recessed housing seat (111), for housing said at least one closing element (106), said at least first recessed housing seat (111) extending around said at least second outlet through opening (105), and delimiting at least one groove (112), said groove extending substantially perimetrically with respect to said at least second outlet through opening (105), for housing at least one sealing element (113) therein, optionally an O-ring, said at least first recessed housing seat (111) optionally having a substantially rectangular configuration.

9. Modular probe-holder (1) according to claim 8, wherein said at least one closing element (106) comprises:
- at least one external element (106a), of configuration substantially corresponding to that of said at least first recessed housing seat (111), said at least one external element (106a) having at least one flat face (106a1), configured to face, in use, said at least one measurement chamber (201); and
- at least one plate-like internal element (106b), fixed to said at least one external element (106a) at said at least one flat face (106a1), and shaped so that one face (106ba) thereof, configured face, in use, said at least one measurement chamber, has size substantially corresponding to the size of said at least second outlet through opening (105), whereby when said at least one closing element (106) closes said at least second outlet through opening (105), said at least one plate-like internal element (106b) closes said at least one measurement chamber (201).

10. Modular probe-holder (1) according to claim 8 and 9, wherein in said at least first recessed housing seat (111) there is formed at least one first fastening seat (111a), and wherein in said at least one external element ( 106a) of said at least one closing element (106) there is formed at least one corresponding first fastening through opening (106a2), whereby when at least one closing element (106) is housed in said at least first recessed housing seat (111), said at least first fastening seat (111a) and said at least corresponding first fastening through opening (106a2) are aligned with each other and can receive corresponding fastening elements (114), configured to secure the closing element (106) to the hollow body (10) so that said measurement chamber (201) is fluid-tight.

11. Modular probe-holder (1) according to any one of the preceding claims, comprising at least one fastening ring (115), configured for fastening in position said probe (1000) for measuring, when said probe (1000) is inserted into said probe-holder (1), and wherein at said at least second inlet through opening (104), said at least one hollow body (10) delimits at least second recessed housing seat (116), for housing said at least one fastening ring (115), said at least second recessed housing seat (116) extending around said at least second inlet through opening (104), and being configured to support said at least one fastening ring (115) inserted on said probe (1000), when said probe (1000) is inserted in said probe-holder (1).

12. Modular probe-holder (1) according to claim 11, wherein said fastening ring comprises at least one band body (115a) arranged according to a substantially circular configuration, having free ends (115b) and (115c), said free ends ending disposed parallel to each other along a substantially radial direction away from said at least one circular band body (115a), wherein at least a corresponding second fastening through opening (115d) is formed in each one of said free ends (115b) and (115c), wherein at least a third fastening through opening (115e) is formed in at least one central portion of said at least one band body (115a), said central portion being substantially opposite to said free ends (115b) and (115c) of the fastening ring, and wherein
in said at least one hollow body (10) there is formed at least a corresponding fourth fastening through opening (117), for connection between an outer face of said hollow body (10), optionally a side wall (109), and said at least second recessed housing seat (116), as well as
- at least a fifth fastening through opening (118), for connection between an outer face of said hollow body (10), optionally a rear wall (110) and said at least second recessed housing seat (116),
whereby when said at least one fastening ring (115) is housed in said at least second recessed housing seat (116), said second fastening through openings (115d) are aligned with said at least fourth fastening through opening (117) and said at least third fastening through opening (115e) is aligned with said at least fifth fastening through opening (118) so that they can receive corresponding fastening elements (120), configured to fasten said at least one fastening ring (115) to said at least one hollow body (10), whereby said probe (1000), is configured to be inserted in said at least one fastening ring (115).

13. Probe (1000) for measuring the turbidity of a fluid, configured to be housed in a modular probe-holder (1) according to any one of the preceding claims, comprising at least one measurement portion (1001), configured to be inserted into said probe-holder (1) at at least one measurement chamber (201) and comprising:
- at least one emitting device (1003), configured for emitting at least one light beam;
- at least one detecting device (1005), configured for detecting said at least one light beam;
- at least one exit (1002), obtained in said at least one measurement portion (1001), said at least one exit (1002) being operatively connected to said at least one emitting device (1003) and configured for allowing the emission of said at least one light beam in said at least one measurement chamber (201);
- at least one entry (1004), obtained in said at least one measurement portion (1001), said at least one entry (1004) being operatively connected to at least one detecting device (1005) and configured for allowing the entrance of said at least one light beam in said at least one measurement chamber (201),
said at least one measurement portion (1001) being further configured so that, when said probe (1000) is inserted in said probe-holder (1) and is in operation, said at least one exit (1002) transmits into said measurement chamber (201) at least one light beam generated by said emitting device (1003) along a forward optical path having an angle between -10 ° and + 10 °, with respect to an axis, passing through said at least one exit (1002) and parallel to said substantially longitudinal axis (x-x) of symmetry of said measurement chamber (201), and said at least one entry (1004) receives said at least one light beam along a backward optical path substantially parallel to said transverse axis (y-y) of symmetry of said at least one measurement chamber (201).

14. Probe (1000) according to claim 13, wherein said measurement portion (1001) comprises at least one face (1006), on which said at least one entry (1002) and said at least one exit (1004) of said probe are supported, wherein said at least one face (1006) is disposed obliquely with respect to a longitudinal axis (w-w) of said probe (1000) and obliquely with respect to said at least one substantially longitudinal axis (x-x) of said at least one hollow body (10), when said probe (1000) is inserted in said probe-holder (1) and fixed thereto.

## Patentansprüche

1. Modularer Sondenhalter (1), der so konfiguriert ist, dass er mindestens eine Sonde (1000) zum Messen der Trübung eines Fluids aufnehmen kann, mit mindestens einem Hohlkörper (10), der eine obere Wand (108), eine untere Wand (107), eine Rückwand (110) zwischen der oberen Wand (108) und der untere Wand (107), eine Vorderwand, die der Rückwand (110) gegenüberliegt und zwischen der oberen Wand (108) und der untere Wand (107) angeordnet ist, und zwei Seitenwände (109), die zwischen der oberen Wand (108) und der untere Wand (107) und zwischen der Rückwand (110) und der Vorderwand angeordnet sind, wobei in dem mindestens einen Hohlkörper (10) mindestens ein Hohlraum (20) ausgebildet ist, der mindestens eine Messkammer (201) begrenzt, wobei die mindestens eine Messkammer (201) so konfiguriert ist, dass sie eine Menge des Fluids aufnimmt, wobei in dem mindestens einen Hohlkörper (10) außerdem erhalten wird:
- mindestens eine erste Einlass-Durchgangsöffnung (101) an der Rückwand (110) des Hohlkörpers (10), die so konfiguriert ist, dass sie die Außenseite des mindestens einen Hohlkörpers (10) mit der mindestens einen Messkammer (201) in Fluidverbindung bringt und das Einströmen des Fluids in die mindestens eine Messkammer (201) ermöglicht;
- mindestens eine erste Auslass-Durchgangsöffnung (102) an der Vorderwand des Hohlkörpers (10) gegenüber der Rückwand (110), die so konfiguriert ist, dass sie die mindestens eine Messkammer (201) mit der Außenseite des mindestens einen Hohlkörpers (10) in Fluidverbindung bringt und den Ausfluss des Fluids aus der mindestens einen Messkammer (201) ermöglicht;
- mindestens eine zweite Einlas-Durchgangsöffnung (104) an der oberen Wand (108) des Hohlkörpers (10), die mit mindestens der mindestens einen Messkammer (201) in Verbindung steht und so konfiguriert ist, dass sie mindestens einen Teil der Sonde (1000) zum Messen des mindestens einen physikalisch-chemischen Parameters des Fluids aufnimmt; und
- mindestens eine zweite Auslass-Durchgangsöffnung (105) an der mindestens einen Messkammer (201), die so konfiguriert ist, dass sie die mindestens eine Messkammer (201) in direkte Verbindung mit der Außenseite des mindestens einen Hohlkörpers (10) an der Vorderwand des Hohlkörpers (10) gegenüber der Rückwand (110) bringt, wobei der modulare Sondenhalter (1) ferner mindestens ein Verschlusselement (106) der mindestens zweiten Auslass-Durchgangsöffnung (105) umfasst, das abnehmbar an dem mindestens einen Hohlkörper (10) befestigt werden kann und die Messkammer (201) an der mindestens zweiten Auslass-Durchgangsöffnung (105) abgrenzt, um einen direkten Zugang zu der mindestens einen Messkammer (201) von der Außenseite der Oberfläche des Hohlraums (20) zu ermöglichen oder zu verhindern, an der mindestens einen Messkammer (201) mit schwarzem Kunststoffmaterial bedeckt ist, und die Oberfläche des mindestens einen Verschlusselements (106) an der mindestens einen Messkammer (201) mit schwarzem Kunststoffmaterial bedeckt ist, wobei in dem mindestens einen Hohlkörper (10)
- mindestens eine dritte Auslass-Durchgangsöffnung (103) an der Bodenwand (107) des Hohlkörpers (10), wobei die dritte Auslass-Durchgangsöffnung (103) konfiguriert ist, um die mindestens eine Messkammer (201) mit der Außenseite des mindestens einen Hohlkörpers (10) in Fluidverbindung zu bringen, und wobei der Hohlraum (20) im Wesentlichen als ein umgedrehtes "T" konfiguriert ist und umfasst:
- mindestens einen hinteren Teil (201a), der dem Kopf des "T" entspricht und sich entlang einer im Wesentlichen längs verlaufenden Achse (x-x) zwischen der mindestens zweiten Einlass-Durchgangsöffnung (104) und der mindestens dritten Auslass-Durchgangsöffnung (103) erstreckt und einen im Wesentlichen kreisförmigen Querschnitt mit einem Durchmesser aufweist, der entlang der im Wesentlichen längs verlaufenden Achse (x-x) variiert;
- mindestens einen vorderen Teil (201b), der dem Körper des "T" entspricht, sich entlang einer im Wesentlichen quer verlaufenden Achse (y-y) in Bezug auf die im Wesentlichen längs verlaufende Achse (x-x) zwischen dem mindestens einen hinteren Teil (201a) und der mindestens zweiten Auslassdurchgangsöffnung (105) erstreckt und einen im Wesentlichen ovalen Querschnitt aufweist.

2. Modularer Sondenhalter (1) nach Anspruch 1, wobei die mindestens eine Messkammer (201) mindestens einen Abschnitt des mindestens einen hinteren Teils (201a) und des mindestens einen vorderen Teils (201b) umfasst.

3. Modularer Sondenhalter (1) nach einem der vorhergehenden Ansprüche, die mindestens ein steckerförmiges Element umfasst, das so konfiguriert ist, dass es durch die Öffnung (105) in den mindestens zweiten Auslass eingesteckt und aus diesem herausgezogen werden kann.

4. Modularer Sondenhalter (1) nach einem der vorhergehenden Ansprüche, wobei der mindestens eine erste Einlass-Durchgangsöffnung (101) mindestens eine erste Einlassleitung (101a) begrenzt, die an ihrem ersten Ende (101b) mit der Außenseite des mindestens einen Hohlkörpers (10) und an ihrem anderen Ende (101c) mit einem unteren Abschnitt der mindestens einen Messkammer (201) in Verbindung steht, und die mindestens erste Einlassleitung (101a) optional parallel zu der mindestens einen Bodenwand (107) angeordnet ist.

5. Modularer Sondenhalter (1) nach einem der vorhergehenden Ansprüche, wobei die mindestens erste Auslassdurchgangsöffnung (102) mindestens eine erste Auslassleitung (102a) begrenzt, die an ihrem ersten Ende (102b) mit der Außenseite des mindestens einen Hohlkörpers (10) und an ihrem anderen Ende (102c) mit einem oberen Abschnitt der mindestens einen Messkammer (201) in Verbindung steht, wobei die mindestens erste Auslassleitung (102a) optional parallel zu der mindestens einen oberen Wand (108) angeordnet ist.

6. Modularer Sondenhalter (1) nach einem der vorhergehenden Ansprüche, wobei der hintere Teil (201a) des mindestens einen Hohlraums (20) mindestens einen oberen Abschnitt (201a1) und mindestens einen mittleren Abschnitt (201a2) umfasst, wobei der mindestens eine obere Abschnitt (201a1) einen größeren Durchmesser als der mindestens eine mittlere Abschnitt (201a2) aufweist, wobei mindestens eine Aussparung (202) zwischen den Abschnitten begrenzt ist, die so konfiguriert ist, dass sie als eine Anschlagwand der Sonde (1000) wirkt, wenn die Sonde in den mindestens einen modularen Sondenhalter (1) durch die mindestens zweite Einlass-Durchgangsöffnung (104) eingeführt wird.

7. Modularer Sondenhalter (1) nach Anspruch 5 und 6, wobei der mindestens erste Auslassleitung (101a) am oberen Teil der mindestens einen Messkammer (201) in den mindestens einen oberen Abschnitt (201a1) des hinteren Teils (201a) des Hohlraums (20) führt.

8. Modularer Sondenhalter (1) nach einem der vorhergehenden Ansprüche, wobei der mindestens eine Hohlkörper (10) an der mindestens zweiten Auslassdurchgangsöffnung (105) mindestens einen ersten vertieften Gehäusesitz (111) zur Aufnahme des mindestens einen Verschlusselements (106) begrenzt , wobei sich der mindestens erste vertiefte Gehäusesitz (111) um die mindestens zweite Auslassdurchgangsöffnung (105) herum erstreckt, und mindestens eine Nut (112) begrenzt, wobei sich die Nut im Wesentlichen perimetrisch in Bezug auf die mindestens zweite Auslassdurchgangsöffnung (105) erstreckt, um mindestens ein Dichtungselement (113) darin unterzubringen, optional einen 0-Ring, wobei der mindestens erste vertiefte Gehäusesitz (111) optional einen im Wesentlichen rechteckigen Querschnitt aufweist.

9. Modularer Sondenhalter (1) nach Anspruch 8, wobei das mindestens eine Verschlusselement (106) umfasst:
- mindestens ein externes Element (106a) mit einer Konfiguration, die im Wesentlichen derjenigen des mindestens ersten vertieften Gehäusesitzes (111) entspricht, wobei das mindestens eine externe Element (106a) mindestens eine flache Fläche (106a1) aufweist, die so konfiguriert ist, dass sie im Gebrauch der mindestens einen Messkammer (201) zugewandt ist; und
- mindestens ein plattenartiges inneres Element (106b), das an dem mindestens einen äußeren Element (106a) an der mindestens einen flachen Seite (106a1) befestigt ist und so geformt ist, dass eine Seite (106ba) davon, die so konfiguriert ist, dass sie im Gebrauch der mindestens einen Messkammer zugewandt ist, eine Größe aufweist, die im Wesentlichen der Größe der mindestens zweiten Auslassdurchgangsöffnung (105) entspricht, wodurch, wenn das mindestens eine Verschlusselement (106) die mindestens zweite Auslassdurchgangsöffnung (105) verschließt, das mindestens eine plattenartige innere Element (106b) die mindestens eine Messkammer (201) verschließt.

10. Modularer Sondenhalter (1) nach Anspruch 8 und 9, wobei in dem mindestens ersten vertieften Gehäusesitz (111) mindestens ein erster Befestigungssitz (111a) ausgebildet ist, und wobei in dem mindestens einen äußeren Element (106a) des mindestens einen Verschlusselements (106) mindestens eine entsprechende erste Befestigungsdurchgangsöffnung (106a2) ausgebildet ist, wodurch, wenn mindestens ein Verschlusselement (106) in dem mindestens ersten vertieften Gehäusesitz (111) untergebracht ist, der mindestens erste Befestigungssitz (111a) und die mindestens entsprechende erste Befestigungsdurchgangsöffnung (106a2) miteinander ausgerichtet sind und entsprechende Befestigungselemente (114) aufnehmen können, die so konfiguriert sind, dass sie das Verschlusselement (106) an dem Hohlkörper (10) befestigen, so dass die Messkammer (201) fluiddicht ist.

11. Modularer Sondenhalter (1) nach einem der vorangehenden Ansprüche, umfassend mindestens einen Befestigungsring (115), der zum Befestigen der Sonde (1000) zum Messen in Position konfiguriert ist, wenn die Sonde (1000) in den Sondenhalter (1) eingeführt ist, und wobei der mindestens eine Hohlkörper (10) an der mindestens zweiten Einlas-Durchgangsöffnung (104) mindestens einen zweiten vertieften Gehäusesitz (116) abgrenzt, zum Aufnehmen des mindestens einen Befestigungsrings (115), wobei sich der mindestens zweite vertiefte Gehäusesitz (116) um die mindestens zweite Einlas-Durchgangsöffnung (104) herum erstreckt und so konfiguriert ist, dass er den mindestens einen Befestigungsring (115), der in die Sonde (1000) eingesetzt ist, stützt, wenn die Sonde (1000) in den Sondenhalter (1) eingesetzt ist.

12. Modularer Sondenhalter (1) nach Anspruch 11, wobei der Befestigungsring mindestens einen Bandkörper (115a) umfasst, der gemäß einer im Wesentlichen kreisförmigen Konfiguration angeordnet ist und freie Enden (115b) und (115c) aufweist, wobei die freien Enden parallel zueinander entlang einer im Wesentlichen radialen Richtung weg von dem mindestens einen kreisförmigen Bandkörper (115a) enden, wobei mindestens eine entsprechende zweite Befestigungsdurchgangsöffnung (115d) in jedem der freien Enden (115b) und (115c) ausgebildet ist, wobei mindestens eine dritte Befestigungsdurchgangsöffnung (115e) in mindestens einem zentralen Abschnitt des mindestens einen Bandkörpers (115a) ausgebildet ist, wobei der zentrale Abschnitt im Wesentlichen gegenüber den freien Enden (115b) und (115c) des Befestigungsrings liegt, und wobei in dem mindestens einen Hohlkörper (10) mindestens eine entsprechende vierte Befestigungsdurchgangsöffnung (117) zur Verbindung zwischen einer Außenfläche des Hohlkörpers (10), optional einer Seitenwand (109), und dem mindestens zweiten vertieften Gehäusesitz (116) ausgebildet ist, sowie
- mindestens eine fünfte Befestigungsdurchgangsöffnung (118) zur Verbindung zwischen einer Außenfläche des Hohlkörpers (10), optional einer Rückwand (110) und dem mindestens zweiten vertieften Gehäusesitz (116), wobei, wenn der mindestens eine Befestigungsring (115) in dem mindestens zweiten vertieften Gehäusesitz (116) untergebracht ist, wenn der mindestens eine Befestigungsring (115) in dem mindestens zweiten vertieften Gehäusesitz (116) untergebracht ist, die zweiten Befestigungsdurchgangsöffnungen (115d) mit der mindestens vierten Befestigungsdurchgangsöffnung (117) ausgerichtet sind und die mindestens dritte Befestigungsdurchgangsöffnung (115e) mit der mindestens fünften Befestigungsdurchgangsöffnung (118) ausgerichtet ist, so dass sie entsprechende Befestigungselemente (120) aufnehmen können, die so konfiguriert sind, dass sie den mindestens einen Befestigungsring (115) an dem mindestens einen Hohlkörper (10) befestigen, wobei die Sonde (1000) so konfiguriert ist, dass sie in den mindestens einen Befestigungsring (115) eingeführt wird.

13. Sonde (1000) zur Messung der Trübung eines Fluids, die so konfiguriert ist, dass sie in einem modularen Sondenhalter (1) nach einem der vorhergehenden Ansprüche untergebracht werden kann, mit mindestens einem Messabschnitt (1001), der so konfiguriert ist, dass er in den Sondenhalter (1) an mindestens einer Messkammer (201) eingeführt werden kann, und weiter umfassend:
- mindestens eine Sendevorrichtung (1003), die zum Aussenden mindestens eines Lichtstrahls konfiguriert ist;
- mindestens eine Erfassungsvorrichtung (1005), die zum Erfassen des mindestens einen Lichtstrahls konfiguriert ist;
- mindestens einen Ausgang (1002), der in dem mindestens einen Messabschnitt (1001) erhalten wird, wobei der mindestens eine Ausgang (1002) operativ mit der mindestens einen Sendevorrichtung (1003) verbunden ist und so konfiguriert ist, dass er die Emission des mindestens einen Lichtstrahls in den mindestens einen Messkammer (201) ermöglicht;
- mindestens einen Eingang (1004), der in dem mindestens einen Messabschnitt (1001) erhalten wird, wobei der mindestens eine Eingang (1004) operativ mit mindestens einer Erfassungsvorrichtung (1005) verbunden ist und so konfiguriert ist, dass er den Eintritt des mindestens einen Lichtstrahls in den mindestens einen Messkammer (201) ermöglicht,
wobei der mindestens eine Messabschnitt (1001) ferner so konfiguriert ist, dass, wenn die Sonde (1000) in den Sondenhalter (1) eingesetzt und in Betrieb ist, der mindestens eine Ausgang (1002) mindestens einen von der Sendevorrichtung (1003) erzeugten Lichtstrahl entlang eines optischen Vorwärtspfades mit einem Winkel zwischen -10° und +10° in die Messkammer (201) überträgt, in Bezug auf eine Achse, die durch den mindestens einen Ausgang (1002) und parallel zu der im Wesentlichen längs verlaufenden Symmetrieachse (x-x) der Messkammer (201) verläuft, in die Messkammer (201), und der mindestens eine Eingang (1004) empfängt den mindestens einen Lichtstrahl entlang eines rückwärtigen optischen Weges, der im Wesentlichen parallel zu der quer verlaufenden Symmetrieachse (y-y) der mindestens einen Messkammer (201) verläuft.

14. Sonde (1000) nach Anspruch 13, wobei der Messabschnitt (1001) mindestens eine Fläche (1006) aufweist, an der der mindestens eine Eingang (1002) und der mindestens eine Ausgang (1004) der Sonde abgestützt sind, wobei die mindestens eine Fläche (1006) schräg in Bezug auf eine Längsachse (w-w) der Sonde (1000) und schräg in Bezug auf die mindestens eine im Wesentlichen längs verlaufende Achse (x-x) des mindestens einen Hohlkörpers (10) angeordnet ist, wenn die Sonde (1000) in den Sondenhalter (1) eingesetzt und an diesem befestigt ist.

## Revendications

1. Porte-sonde modulaire (1), configuré pour loger au moins une sonde (1000) destinée à mesurer la turbidité d'un fluide, comprenant au moins un corps creux (10) ayant une paroi supérieure (108), une paroi inférieure (107), une paroi arrière (110) entre ladite paroi supérieure (108) et ladite paroi inférieure (107), une paroi avant, opposée à ladite paroi arrière (110) et agencée entre ladite paroi supérieure (108) et ladite paroi inférieure (107), et deux parois latérales (109) agencées entre ladite paroi supérieure (108) et ladite paroi inférieure (107) et entre ladite paroi arrière (110) et ladite paroi avant, où, dans ledit au moins un corps creux (10), est formée au moins une cavité (20) délimitant au moins une chambre de mesure (201), ladite au moins une chambre de mesure (201) étant configurée pour recevoir une quantité dudit fluide, dans ledit au moins un corps creux (10) étant en outre obtenu :
- au moins une première ouverture traversante d'entrée (101), au niveau de la paroi arrière (110) dudit corps creux (10), configurée pour mettre en communication fluidique l'extérieur dudit au moins un corps creux (10) avec ladite au moins une chambre de mesure (201), et permettre l'écoulement entrant dudit fluide dans ladite au moins une chambre de mesure (201) ;
- au moins une première ouverture traversante de sortie (102), au niveau de la paroi avant dudit corps creux (10) opposée à ladite paroi arrière (110), configurée pour mettre en communication fluidique ladite au moins une chambre de mesure (201) avec l'extérieur dudit au moins un corps creux (10), et permettre l'écoulement sortant dudit fluide hors de ladite au moins une chambre de mesure (201) ;
- au moins une seconde ouverture traversante d'entrée (104), au niveau de la paroi supérieure (108) dudit corps creux (10), communiquant au moins avec ladite au moins une chambre de mesure (201) et configurée pour loger au moins une partie de ladite sonde (1000) pour mesurer ledit au moins un paramètre physico-chimique dudit fluide ; et
- au moins une deuxième ouverture traversante de sortie (105), au niveau de ladite au moins une chambre de mesure (201), configurée pour mettre ladite au moins une chambre de mesure (201) en communication directe avec l'extérieur dudit au moins un corps creux (10) au niveau de la paroi avant dudit corps creux (10) opposée à ladite paroi arrière (110),
ledit porte-sonde modulaire (1) comprenant en outre au moins un élément de fermeture (106) de ladite au moins deuxième ouverture traversante de sortie (105), qui peut être fixé de manière amovible sur ledit au moins un corps creux (10) et délimite ladite chambre de mesure (201) au niveau de ladite au moins deuxième ouverture traversante de sortie (105), de manière à permettre ou à empêcher l'accès direct à ladite au moins une chambre de mesure (201) depuis l'extérieur, la surface de ladite cavité (20), au niveau de ladite au moins une chambre de mesure (201), étant recouverte d'une matière plastique noire, et la surface dudit au moins un élément de fermeture (106), au niveau de ladite au moins une chambre de mesure (201), étant recouverte d'une matière plastique noire, où, dans ledit au moins un corps creux (10), au moins une troisième ouverture traversante de sortie (103) est obtenue au niveau de la paroi inférieure (107) dudit corps creux (10), ladite troisième ouverture traversante de sortie (103) étant configurée pour mettre en communication fluidique ladite au moins une chambre de mesure (201) avec l'extérieur dudit au moins un corps creux (10), et
où ladite cavité (20) est sensiblement configurée comme un « T » retourné et comprend :
- au moins une partie arrière (201a), correspondant à la tête du « T », s'étendant le long d'un axe sensiblement longitudinal (x-x) entre ladite au moins seconde ouverture traversante d'entrée (104) et ladite au moins troisième ouverture traversante de sortie (103), et présentant une coupe transversale sensiblement circulaire dont le diamètre varie le long dudit axe sensiblement longitudinal (x-x) ;
- au moins une partie avant (201b), correspondant au corps du « T », s'étendant le long d'un axe sensiblement transversal (y-y) par rapport audit axe sensiblement longitudinal (x-x), entre ladite au moins une partie arrière (201a) et ladite au moins deuxième ouverture traversante de sortie (105), et présentant une coupe transversale sensiblement ovale.

2. Porte-sonde modulaire (1) selon la revendication 1, où ladite au moins une chambre de mesure (201) comprend au moins une partie de ladite au moins une partie arrière (201a) et de ladite au moins une partie avant (201b).

3. Porte-sonde modulaire (1) selon l'une quelconque des revendications précédentes, comprenant au moins un élément en forme de bouchon, configuré pour être inséré dans ladite au moins deuxième ouverture traversante de sortie (105) et pour en être désinséré.

4. Porte-sonde modulaire (1) selon l'une quelconque des revendications précédentes, où ladite au moins première ouverture traversante d'entrée (101) délimite au moins un premier conduit d'entrée (101a) qui communique, à sa première extrémité (101b), avec l'extérieur dudit au moins un corps creux (10) et, à son autre extrémité (101c), avec une partie inférieure de ladite au moins une chambre de mesure (201), et ledit au moins premier conduit d'entrée (101a) étant optionnellement agencé parallèlement à ladite au moins une paroi inférieure (107).

5. Porte-sonde modulaire (1) selon l'une quelconque des revendications précédentes, où ladite au moins première ouverture traversante de sortie (102) délimite au moins un premier conduit de sortie (102a) qui communique, à sa première extrémité (102b), avec l'extérieur dudit au moins un corps creux (10) et, à son autre extrémité (102c), avec une partie supérieure de ladite au moins une chambre de mesure (201), ledit au moins premier conduit de sortie (102a) étant optionnellement agencé parallèlement à ladite au moins une paroi supérieure (108).

6. Porte-sonde modulaire (1) selon l'une quelconque des revendications précédentes, où ladite partie arrière (201a) de ladite au moins une cavité (20) comprend au moins une section supérieure (201a1) et au moins une section centrale (201a2), ladite au moins une section supérieure (201a1) ayant un diamètre supérieur à celui de ladite au moins une section centrale (201a2), de sorte qu'au moins un relief (202) est délimité entre lesdites sections, configuré pour fonctionner comme une paroi de butée de ladite sonde (1000), lorsque ladite sonde est insérée dans ledit au moins un porte-sonde modulaire (1), à travers ladite au moins seconde ouverture traversante d'entrée (104).

7. Porte-sonde modulaire (1) selon les revendications 5 et 6, où ledit au moins premier conduit de sortie (101a), au niveau de la partie supérieure de ladite au moins une chambre de mesure (201), mène à ladite au moins une section supérieure (201a1) de ladite partie arrière (201a) de la cavité (20).

8. Porte-sonde modulaire (1) selon l'une quelconque des revendications précédentes, où, au niveau de ladite au moins deuxième ouverture traversante de sortie (105), ledit au moins un corps creux (10) délimite au moins un premier siège de logement évidé (111), destiné à loger ledit au moins un élément de fermeture (106), ledit au moins premier siège de logement évidé (111) s'étendant autour de ladite au moins deuxième ouverture traversante de sortie (105), et délimitant au moins une rainure (112), ladite rainure s'étendant de manière sensiblement périmétrique par rapport à ladite au moins deuxième ouverture traversante de sortie (105), pour y loger au moins un élément d'étanchéité (113), optionnellement un joint torique, ledit au moins premier siège de logement évidé (111) ayant optionnellement une configuration sensiblement rectangulaire.

9. Porte-sonde modulaire (1) selon la revendication 8, où ledit au moins un élément de fermeture (106) comprend :
- au moins un élément externe (106a) dont la configuration correspond sensiblement à celle dudit au moins premier siège de logement évidé (111), ledit au moins un élément externe (106a) présentant au moins une face plane (106a1), configurée pour faire face, en cours d'utilisation, à ladite au moins une chambre de mesure (201) ; et
- au moins un élément interne en forme de plaque (106b), fixé audit au moins un élément externe (106a) au niveau de ladite au moins une face plane (106a1), et conformé de sorte qu'une face (106ba) de celui-ci, configurée pour faire face, en cours d'utilisation, à ladite au moins une chambre de mesure, présente une taille correspondant sensiblement à la taille de ladite au moins deuxième ouverture traversante de sortie (105), de sorte que, lorsque ledit au moins un élément de fermeture (106) ferme ladite au moins deuxième ouverture traversante de sortie (105), ledit au moins un élément interne en forme de plaque (106b) ferme ladite au moins une chambre de mesure (201).

10. Porte-sonde modulaire (1) selon les revendications 8 et 9, où, dans ledit au moins premier siège de logement évidé (111), est formé au moins un premier siège de fixation (111a), et où, dans ledit au moins un élément externe (106a) dudit au moins un élément de fermeture (106), est formé au moins une première ouverture traversante de fixation correspondante (106a2), de sorte que, lorsqu'au moins un élément de fermeture (106) est logé dans ledit au moins premier siège de logement évidé (111), ledit au moins premier siège de fixation (111a) et ladite au moins première ouverture traversante de fixation correspondante (106a2) sont alignés l'un(e) avec l'autre et peuvent recevoir des éléments de fixation correspondants (114), configurés pour fixer l'élément de fermeture (106) au corps creux (10) de sorte que ladite chambre de mesure (201) est étanche aux fluides.

11. Porte-sonde modulaire (1) selon l'une quelconque des revendications précédentes, comprenant au moins une bague de fixation (115), configurée pour fixer en position ladite sonde (1000) de mesure, lorsque ladite sonde (1000) est insérée dans ledit porte-sonde (1), et où, au niveau de ladite au moins seconde ouverture traversante d'entrée (104), ledit au moins un corps creux (10) délimite au moins un second siège de logement évidé (116), pour loger ladite au moins une bague de fixation (115), ledit au moins second siège de logement évidé (116) s'étendant autour de ladite au moins seconde ouverture traversante d'entrée (104), et étant configuré pour prendre en charge ladite au moins une bague de fixation (115) insérée sur ladite sonde (1000), lorsque ladite sonde (1000) est insérée dans ledit porte-sonde (1).

12. Porte-sonde modulaire (1) selon la revendication 11, où ladite bague de fixation comprend au moins un corps de bande (115a), agencé selon une configuration sensiblement circulaire, présentant des extrémités libres (115b) et (115c), lesdites extrémités libres se terminant disposées parallèlement l'une à l'autre le long d'une direction sensiblement radiale s'éloignant dudit au moins un corps de bande (115a) circulaire, où au moins une deuxième ouverture traversante de fixation correspondante (115d) est formée dans chacune desdites extrémités libres (115b) et (115c), où au moins une troisième ouverture traversante de fixation (115e) est formée dans au moins une partie centrale dudit au moins un corps de bande (115a), ladite partie centrale étant sensiblement opposée auxdites extrémités libres (115b) et (115c) de la bague de fixation, et où, dans ledit au moins un corps creux (10), est formée au moins une quatrième ouverture traversante de fixation correspondante (117), permettant la connexion entre une face extérieure dudit corps creux (10), optionnellement une paroi latérale (109), et ledit au moins second siège de logement évidé (116), ainsi qu'au moins une cinquième ouverture traversante de fixation (118), permettant la connexion entre une face extérieure dudit corps creux (10), optionnellement une paroi arrière (110), et ledit au moins second siège de logement évidé (116), de sorte que, lorsque ladite au moins une bague de fixation (115) est logée dans ledit au moins second siège de logement évidé (116), lesdites deuxièmes ouvertures traversantes de fixation (115d) sont alignées avec ladite au moins quatrième ouverture traversante de fixation (117), et ladite au moins troisième ouverture traversante de fixation (115e) est alignée avec ladite au moins cinquième ouverture traversante de fixation (118), de sorte qu'elles peuvent recevoir des éléments de fixation correspondants (120), configurés pour fixer ladite au moins une bague de fixation (115) audit au moins un corps creux (10), de sorte que ladite sonde (1000) est configurée pour être insérée dans ladite au moins une bague de fixation (115).

13. Sonde (1000) destinée à mesurer la turbidité d'un fluide, configurée pour être logée dans un porte-sonde modulaire (1) selon l'une quelconque des revendications précédentes, comprenant au moins une partie de mesure (1001), configurée pour être insérée dans ledit porte-sonde (1) au niveau d'au moins une chambre de mesure (201) et comprenant :
- au moins un dispositif d'émission (1003), configuré pour émettre au moins un faisceau lumineux ;
- au moins un dispositif de détection (1005), configuré pour détecter ledit au moins un faisceau lumineux ;
- au moins une sortie (1002), obtenue dans ladite au moins une partie de mesure (1001), ladite au moins une sortie (1002) étant reliée fonctionnellement audit au moins un dispositif d'émission (1003) et configurée pour permettre l'émission dudit au moins un faisceau lumineux dans ladite au moins une chambre de mesure (201) ;
- au moins une entrée (1004), obtenue dans ladite au moins une partie de mesure (1001), ladite au moins une entrée (1004) étant reliée fonctionnellement à au moins un dispositif de détection (1005) et configurée pour permettre l'entrée dudit au moins un faisceau lumineux dans ladite au moins une chambre de mesure (201),
ladite au moins une partie de mesure (1001) étant en outre configurée de sorte que, lorsque ladite sonde (1000) est insérée dans ledit porte-sonde (1) et qu'elle est en fonctionnement, ladite au moins une sortie (1002) transmet, dans ladite chambre de mesure (201), au moins un faisceau lumineux généré par ledit dispositif d'émission (1003) le long d'un trajet optique avant ayant un angle compris entre -10° et + 10°, par rapport à un axe, traversant ladite au moins une sortie (1002) et parallèle audit axe sensiblement longitudinal (x-x) de symétrie de ladite chambre de mesure (201), et ladite au moins une entrée (1004) reçoit ledit au moins un faisceau lumineux le long d'un trajet optique vers l'arrière sensiblement parallèle audit axe transversal (y-y) de symétrie de ladite au moins une chambre de mesure (201).

14. Sonde (1000) selon la revendication 13, dans laquelle ladite partie de mesure (1001) comprend au moins une face (1006) sur laquelle sont supportées ladite au moins une entrée (1002) et ladite au moins une sortie (1004) de ladite sonde, dans laquelle ladite au moins une face (1006) est disposée obliquement par rapport à un axe longitudinal (w-w) de ladite sonde (1000) et obliquement par rapport audit au moins un axe sensiblement longitudinal (x-x) dudit au moins un corps creux (10), lorsque ladite sonde (1000) est insérée dans ledit porte-sonde (1) et qu'elle est fixée à celui-ci.
